Europäisches Patentamt

European Patent Office

Office européen des brevets

(19)

(11) Publication number: **0 239 324**
**A2**

(12) # EUROPEAN PATENT APPLICATION

(21) Application number: **87302382.4**

(22) Date of filing: **19.03.87**

(51) Int. Cl.⁴: **G 06 F 15/16, G 06 F 13/42**

(30) Priority: **20.03.86 US 841808**

(43) Date of publication of application: **30.09.87 Bulletin 87/40**

(84) Designated Contracting States: **AT BE CH DE ES FR GB GR IT LI LU NL SE**

(71) Applicant: **ChannelNet Corporation, 3530 Boston Post Road, Southport Connecticut 06490 (US)**

(72) Inventor: **Armstrong, C.Peter, 720 North Park Aveneu, Easton CT 06612 (US)**
Inventor: **Steiner, Ronald P., 248 Euclid Avenue, Fairfield CT 06430 (US)**
Inventor: **Nusbam, Mitchell J., 1648 East 55th Street, Brooklyn NY 11234 (US)**
Inventor: **Yursis, Paul, 3901 Park Avenue, Fairfield CT 06430 (US)**

(74) Representative: **Thomas, Roger Tamlyn et al, D. Young & Co. 10 Staple Inn, London WC1V 7RD (GB)**

(54) **CPU channel to CPU channel extender.**

(57) A system is described with which a channel of an IBM central processor unit (CPU) may communicate at channel speed with a channel of another CPU over extended distances. The system incorporates coupler units at each CPU site and each coupler unit has high speed dedicated data transfer logic that is enabled during data transfer by a microprocessor. During initial selection sequences the microprocessor controls and sets up conditions for data communication through a high speed serial full duplex data link capable of accommodating channel speed data transfers. Each coupler employs suitable parallel to serial and serial to parallel converters. Parity error checks are performed throughout the system to detect errors and alert the system of the occurrence of errors. Data transfers occur without interlock across the link and in a rapid manner.

# CPU CHANNEL TO CPU CHANNEL EXTENDER

This invention relates to computers generally and more specifically to a method and apparatus for extending the distance over which an IBM computer channel can communicate with another IBM computer channel at channel speeds.

In a conventional IBM mainframe environment a central processor unit (CPU) has typically a plurality of input/output channels which are connected by cables to communicate in an interlocked manner with peripheral devices through devices known as control units. In a typical connection an IBM channel will have input and output bus and tag lines, special interlock and control lines, each of which is a coaxial cable that is carefully shielded and terminated to maintain the integrity of the signal lines. These lines are required by IBM to be limited in length in order to preserve certain timing constraints in an interlocked communication operation between a CPU channel and another channel or with a control unit. Hence, even if the initial expense of longer coaxial cables is warranted to, for example, place peripheral devices in another building than where the CPU is located, the timing constraints tend to limit the separation distance.

The communication protocol between an IBM mainframe CPU channel and external devices has been publicly described. One such publication is by IBM itself and is entitled, IBM System/360 and 370 I/O Interface Channel to Control Unit OEMI, published originally in 1971 under GA22-6974. Patents on the I/O interface have issued, such as U.S. Patents 3,336,582, 3,400,372 and 3,582,906 to Beausoleil et al and many others. A key feature of the channel I/O interface is that the rise and fall of all signals transmitted over the interface are generally controlled by interlocked responses.

A system for establishing data communication at channel speeds between IBM channels has been described and is available from IBM as its Channel-to-Channel Adapter (CTCA) as described in its publications SA22-7091 and GA22-7081 as well as the above identified IBM patent, U.S. 3,400,372. Such channel-to-channel adapters are connected to both channels through conventional bus and tag coaxial cables and as a result the separation distance between the channel is limited, normally to a distance of the order of from about 400 to 800 feet depending upon where the channel adapter is located.

Techniques have been proposed to extend the IBM channel so that it can communicate at high speeds with a remotely located control unit. One such technique proposed by IBM itself is known as the 3044 system and enables a channel to communicate with a remotely located control unit through a fiber optic data communication link. The product, as described in IBM's Publication Number GA22-7097, extends the channel-to-control-unit distance to a maximum of 2000 meters (6,600 ft). The effect of the extender as a practical matter reduces the effective data rate, thus undesirably increasing the channel busy time. This speed reduction is believed to arise by virtue of the interlocked operation, by which for each data byte that is transmitted at least two or four additional link trips are needed to complete a transfer of the data byte.

When CPU's at remotely located sites are desired to be connected, a well known technique involves a teleprocessing link and a pair of so called front-end-processors (FEP). Such FEP to FEP link downgrades the speed at which the CPU's can communicate and thus limits the information flow.

According to one aspect of this invention, there is provided a system for enabling a first IBM CPU channel located at one site to communicate at a channel speed with a second remotely-located channel of another IBM CPU located at a remote site through a duplex high speed serial data communication link that extends between the sites, comprising:

first and second couplers for coupling to said data link and respectively through bus and tag cables to the first and second channels,

said couplers each comprising:

PISO means for converting data in parallel form to a serial form suitable for transmission through the data link at a channel speed;

SIPO means for receiving serial data passed through the link from PISO means and for converting said received data to parallel form;

means for generating vectors for transmittal from a source coupler over the data link to the other coupler, wherein the vectors represent sequences desired between the other coupler and its connected channel and represent the status of the source coupler and its data communication with a CPU channel;

means for detecting said vectors to initiate said sequences; and

data transfer and assist logic means coupled to the PISO means and SIPO means for data communication through bus and tag cables to a CPU channel to transfer data channel speed with a channel using interlocking signals and provide data to said PISO means without interlocking signals.

According to another aspect of this invention, there is provided a method for enabling a first IBM CPU channel located at one site to communicate at a channel speed with a second remotely located channel of another IBM CPU located at a remote site through a duplex high speed serial data communication link that extends between the sites, comprising the steps of:

commencing an initial selection sequence with a first channel at one site;

producing at said one site, a vector representative of a selection sequence desired with the second channel at the remote site;

generating interlocked signal sequences with the first channel to transfer data therefrom to the data link;

sending the data over the data link without interlocking signals to the remote site; and

transferring data at the remote site to the second channel using interlocking signals.

With a system and method    as disclosed herein an IBM CPU channel can directly communicate with another IBM CPU channel with very long separation distances between the channels in a manner that is transparent to the software and/or hardware operating the CPU channel. Distances greater than five kilometers (three miles) can be accommodated between CPU's, yet channel speed communication is obtained with data rates as high as three megabytes (MB) per second.

This is obtained by employing a channel coupler that emulates a control unit at one channel, say the A side, and another similar channel coupler at the other channel, say the B side. A high speed serial communication link, such as a pair of fiber optic links, is connected between the A and B side couplers to enable full duplex data flow. Data communication is initiated by the respectively connected channels but assisted by a microprocessor which is programmed to manage communication along the link. A controller, such as a small computer, is coupled to the microprocessor to

6

enable manual control and monitoring of the data link.

Data transfer between the channels can be done without slow-down due to interlock or the effect of the serial communication link. The link has sufficient bandwidth to enable high speed·data transfer between the channels.

As described herein for one embodiment in accordance with the invention, similar couplers are formed and located at widely separated IBM CPU channels. One channel may be five kilometers and even longer from the other and an optical fiber link, that has at least two fibers for bidirectional data communication, is operatively connected to the couplers through wide bandwidth receivers and transmitters. Each coupler has a parallel to serial (PISO) and serial to parallel (SIPO) converter so that parallel data from one channel can be serially transmitted through the link at a high speed, say at a rate of the order of 45 Mbps, to the other channel.

Each coupler is connected through bus and tag cables to a channel and has data transfer logic to effect high data transfer to or from the channel. A microprocessor is connected to the data transfer logic and to a controller to establish and monitor communication along the link between the couplers.

The microprocessor is programmed to establish initial selection sequences with the bus and tag cable connected channel as well as produce initial communications needed to establish the proper remote channel conditions needed to enable data transfer between the channels. For example, when one channel requires to write data to the remote channel an initialization sequence is begun with the microprocessor in the connected coupler until a write command and an accompanying address is generated.

The command and address are then sent to the remote coupler along the link to cause it to commence an initial selection sequence with the remote channel. Various responses and control signals are passed along the data link between the couplers until one channel is in a state to write and the remote channel is in a complementary state to read.

Data transfer logic networks in both couplers are then enabled and data is written from one channel to the remote channel at a high speed with interlock but no interlock across the link so as to allow a data transfer speed that is independent of data link length.

With an extended channel-to-channel adapter as described herein, remotely located CPU's can be connected through a high speed data link in a software transparent manner. CPU's can be conveniently placed yet coupled to each other as if they are connected to each other through a conventional channel-to-channel adapter by bus and tag cables. With a system . as described herein, CPU's can be placed at convenient and more economic locations.

The applicants have found that it is possible to provide an extender system with which one channel of an IBM CPU can transfer data to another remotely located channel of another IBM CPU at channel speeds in a software transparent manner.

The invention will now be described by way of example, reference being made to the accompanying drawings in which:-

Figure 1 is a block diagram of a channel-to-channel extender system in accordance with an embodiment of this invention;

Figure 2 is diagramatic view of a link word and a listing of control vectors for use in an embodiment of this invention;

Figure 3 is listing of other control vectors;

Figures 4 and 5 are more detailed block diagram views of portions of the system shown in Figure 1;

Figure 6 is a vertically spread timing diagram applicable to a system reset vector used in the system of Figure 1;

Figure 7 is a timing diagram applicable to buffer control vector used in the systems of Figure 1; and

Figure 8 is a vertically spread timing diagram illustrating physically separated events leading to a data communication between the channels.

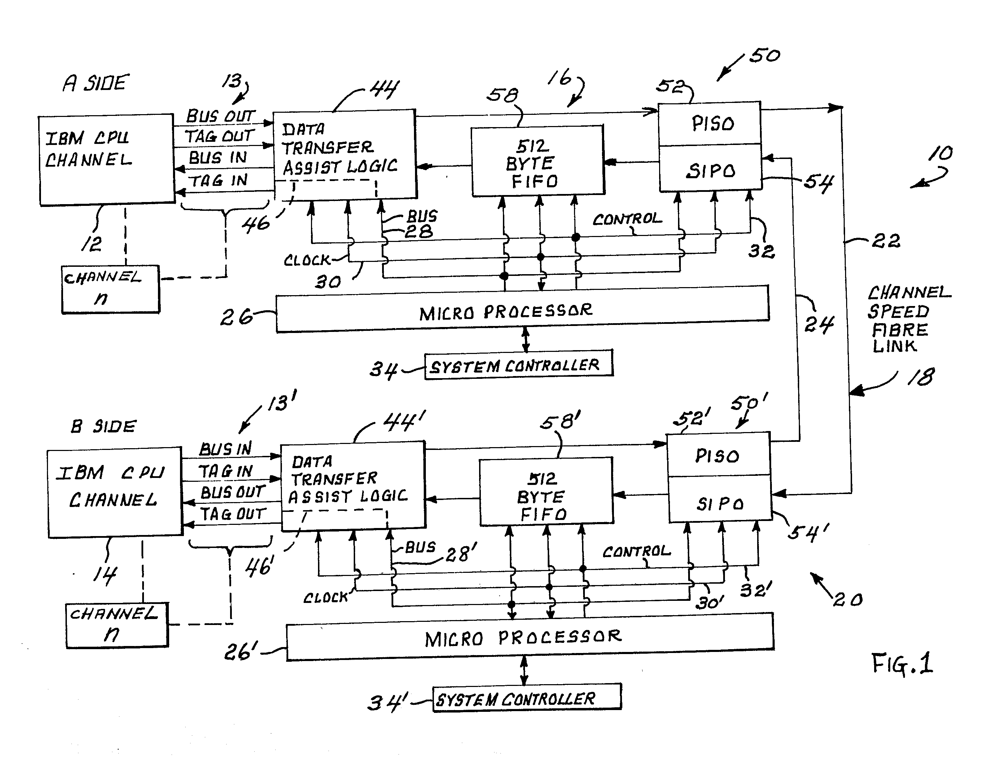

With reference to Figure 1, a channel-to-channel extender 10 in accordance with an embodiment of the invention is shown with which a software and/or hardware operated channel 12 of an IBM CPU can communicate with a remotely located apparatus such as a channel 14 of another IBM CPU. Channel 12 is connected through bus and tag cables 13 to a coupler unit 16 and can communicate with channel 14 via a serial high speed data link 18 and another coupler unit 20.

The data link 18 is full duplex and may be formed of a variety of broad band media capable of transmitting data at channel speeds, say of the order of 3 megabytes per second. The data link, therefore, may be formed of coaxial cable or microwave but preferably is formed of a fiber optic cable having at least a pair of fibers 22, 24 to carry bidirectional data. The fibers are preferred because they provide a very low error data path, are easily installed and represent a secure medium that is difficult to tap. The fiber data link 18 can be quite long, of the order of 5 kilometers and can sustain an effective data rate of 45 Mbits per second.

Fiber optic links and transducer techniques for coupling electrical signals to them are well known in the art. Coupler units 16 and 20 are alike and together provide the functions of a channel-to-channel adapter as shown and described for example in the aforementioned patent U.S. 3,400,372 and sample of the IBM publications. Thus functions and devices needed to establish a data transfer between channels of an IBM CPU are known and to the extent particulars for the couplers 16 and 20 are required, reference can be had to such publications. In addition, the sequence of signals needed to establish communication with an IBM CPU channel are also described in the aforementioned 360/370 interface publication and reference to such publication should be made.

Couplers 16 and 20 are of like structure and each acts as a control unit with the channel with which it is connected through bus and tag cables 13. Hence, the description of coupler 16 as follows herein is also applicable to coupler 20 as illustrated by the use of primed reference numbers.

Coupler 16 has a microprocessor 26 that is selected for its high operating speed capability on a limited instruction set. One such microprocessor is the 8X305 made and sold by the Signetics Corporation and made available with elaborate instructions and suggestions how to incorporate it with other devices such as additional memory. The microprocessor has an input and output bus 28 through which instructions and control over the data link can be sent. In addition, it provides clock signals on lines 30 and sends or receives special control signals on lines 32.

The microprocessor 26 also communicates with a controller 34 which may be a small computer, such as an IBM XT with a keyboard and display. Controllers 34, 34' serve to visually monitor system 10, provide downloading of the microprocessors 26, 26' with appropriate programs and assist in diagnostic analysis of system 10. Microprocessors 26, 26' may be formed and coupled to controllers 34, 34' in the manner as more particularly shown and described in our copending European Patent Application No. 8730----.- entitled, Channel to Control Unit Extender, filed on 19th March 1987.

Coupler 16 includes a data transfer assist logic network 44 that is connected to bus and tag cables 13 and serves to provide direct control and communication with channel 12 during channel speed data transfers while communication with channel 12 during initial selection and end sequences is controlled by the program in the microprocessor 26. The latter, therefore, has its bidirectional bus 28 and certain control lines 32 also effectively coupled to the bus and tag cables 13 as suggested by dotted line 46. Network 44 includes such circuits and devices as are known in the art to initiate or complete protocol signals necessary for data transfer.

Coupler 16 further is provided with a data link interface 50 composed of a parallel to serial converter 52 (PISO) which converts parallel data words of twelve bits each from the data transfer logic 44 and link control words from microprocessor 26 to a serial format. The format is selected to provide an efficient bandwidth while maintaining synchronization and uses a guaranteed number of transitions per unit time to recover the clock at the remote coupler unit. One such technique employs a modified Miller code. Individual words are uniquely identified by intentionally causing a violation of the Miller code algorithm at a known position of the words by for example suppressing a leading transition so that this yields a thirteenth bit where none should be.

The serialized data is applied to a suitable fiber optic transmitter using, in this case, a light emitting diode capable of generating light pulses of sufficient intensity to travel down link 22 and be able to be detected by a fiber optic receiver using in this case a P.I.N. photodiode as the detector. The received serial data enters a serial-to-parallel converter (SIPO) 54' in coupler 20. Similarly, the PISO network 52' in coupler 20 includes a light source suitable for sending light pulses down link 24 for detection by SIPO network 54 in coupler 16.

The SIPO networks 54, 54' provide parallel data outputs for received words from corresponding PISO networks on output lines, 56, 56' which are coupled to FIFO (first-in-first-out) buffers 58, 58'. Depending upon whether the parallel words represent data or control signals they are either respectively passed on to data transfer logic networks, 44, 44' or into the microprocessors 26, 26'. The FIFO buffers 58, 58' have sufficient byte storage to accommodate speed variations during data transfer. In this case, the buffers 58, 58' each can store 512 bytes. When bytes destined for a channel arrive from a SIPO network 54 the bytes are immediately passed through and only buffered as that appears necessary. The FIFO buffers, therefore, include appropriate heading vectors or address indicators to note where the first-to-arrive byte is located and which needs to be transferred to either channel 12 or microprocessor 26.

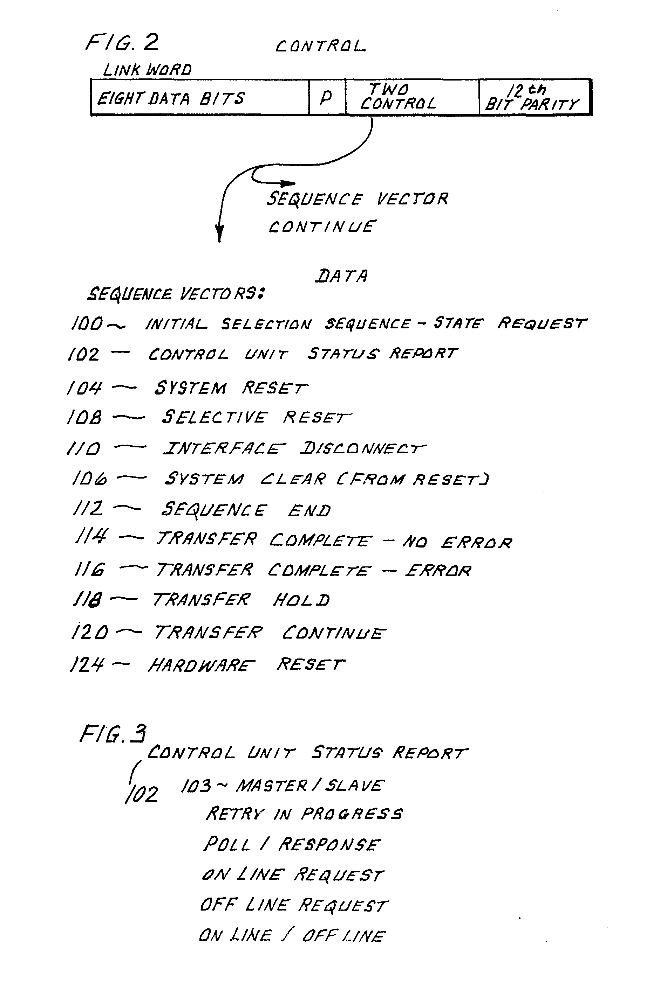

Communication between coupler units 16, 20 involves link data words as illustrated at 70 in Figure 2. Each link word is formed of twelve bits, divided into eight data bits plus parity, two control bits and a twelfth global parity bit. The control bits identify whether the data bits are for transmission by data transfer logic networks 44, 44' directly to the channels 12, 14 or for use by the microprocessor for control over the system 10 sequences to commence or terminate communication with the channels.

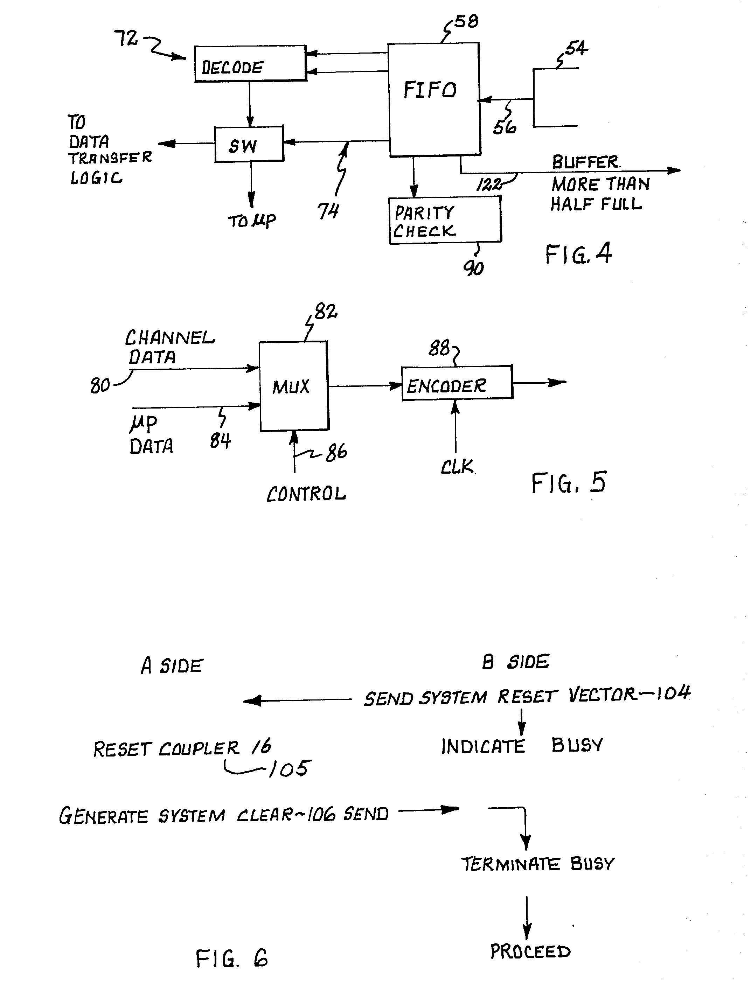

Control over the communication with channels is obtained with sequence vectors which may be followed by a number of data bytes depending upon the particular vector. The arrival of a control sequence vector is identified with a network as illustrated at 72 in Figure 4. Here incoming data is passed through the FIFO 58 and at its output 74 a decode network 76 responsive to the control bits in a word operates a switch 78 to direct data either onto data transfer logic network 44 or to the microprocessor 26. Note that the detection by decode 76 of a data byte destined for the data transfer logic could be used to initiate the protocol necessary to transfer the data byte to the connected channel from the network 44.

Outgoing data from data transfer logic network 44 and that originating from microprocessor 26 may be combined in a PISO network 52 in a manner as illustrated in Figure 5. Data on line 80 from a channel is applied in parallel to a switch or multiplexer 82 together with data on line 84 from microprocessor 26. Depending upon the state of a control line 86, as controlled by the microprocessor, bytes of data are passed on to an encoder 88 in which the parallel bytes are converted to serial format, control bits are added, the global parity bit is included and a suitable serial code format is formed. This serial code as described is a Miller code designed to minimize bandwidth yet provide a sufficient regular frequency of transitions to enable a SIPO network 54 to reconstruct the clock rate and thus the serial data.

The SIPO networks 54, 54' include appropriate optical detectors, clock detectors to reconstruct the data and decoding networks to convert the Miller coded data back to a format compatible for use by a channel and the microprocessor. In addition each FIFO buffer network includes a parity checker circuit, 90, see Figure 4, to detect a global parity error. Such global parity error detection is passed onto the microprocessor 26 for storage, data link monitoring and control.

Control words transmitted along the link 18 are entered into the microprocessor 26 which is programmed to decode the words and act in accordance with the data contained in sequential data bytes that are known to follow particular vectors. A particular sequence vector is identified by the count in the data field of the leading link word.

For example, the arriving initial selection sequence vector 100 in Figure 2 indicates that an initial selection sequence has been initiated, for example, by channel 12, the A side of the link 18. Three bytes of data are known to follow this vector and respectively indicate the path address for the initial selection, the A side path state information and the actual channel command to be executed by channel 14 on the B side. The vector is interpreted as a request for B side path state information.

A reply from the B side consisting of the B side path state in one link word and the B side path command in a second word is expected in response to the sending of vector 100. Further link communication for the initial selection sequence is dependent upon the particulars of the path state and the channel command. The reverse occurs when a vector 100 is detected on the A side.

Other vectors, such as listed in Figure 2, are used. Vector 102 is used for control unit state requests and reports with particular status information as identified in Figure 3. The master/slave designation 103 identifies one coupler unit as the master and the other as a slave. Hence, if both channels 12, 14 would happen to issue a command at the same time, the command emanating from the master coupler would be responded to by the slave coupler. The system reset vector 104, when detected, as illustrated in Figure 6 causes a reset at 105 on the side that decodes it. During the time the decoding side is to act on vector 104, the sending side is expected to indicate busy. Once the receiving side has been reset, a system clear vector 106 is sent to the side from where the reset vector 104 originated.

The selective reset vector 108 (see Figure 2) identifies to the receiving side which particular path is to be reset at 105 and no response to such vector's transmission is expected. Similarly, the interface disconnect vector 110 directs which I/O device is to be disconnected and no response to such vector is expected.

The sequence end vector 112 is used to signal an abort of a sequence. For example, vector 112 would be sent if, during an initial selection sequence started by vector 100, it is followed by a channel command with incorrect parity.

Vectors 114 and 116 are used to end a completed data transfer, with vector 114 representing a successful completion without error and vector 116 to indicate a data link or channel error.

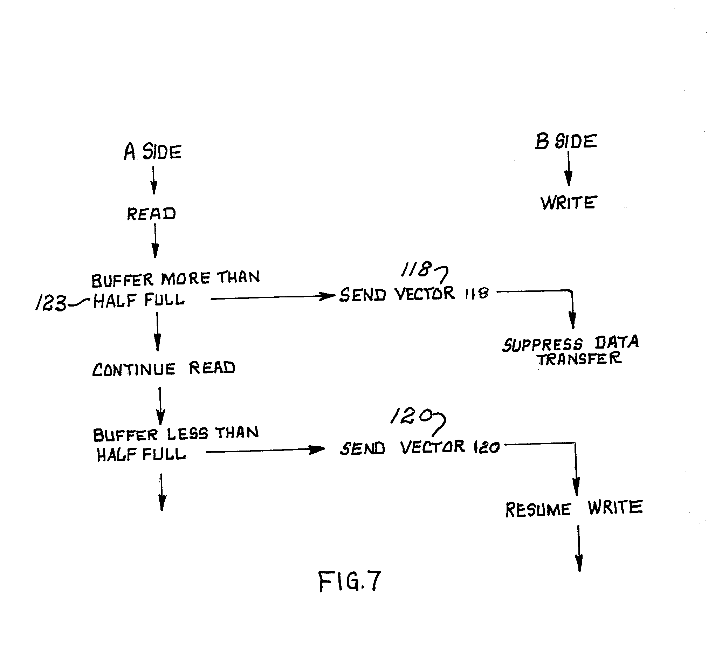

Vectors 118 and 120 are used during the transfer of data from a channel to indicate when a buffer 58 becomes filled beyond a predetermined level as indicated on line 122, see Figure 4, from the buffer. Thus vector 118 is generated at 123 by the side performing a read command to indicate as shown in Figure 7 to the side doing a write command that the read FIFO buffer 58 is half full. Upon receipt of this vector 118 the write side is expected to suppress data transfer until that side receives the transfer continue vector 120. This vector is sent when the signal level on line 122 (see Figure 4) again indicates the buffer has gone less than half full. Buffer fill level can be determined by comparing the address of the head pointer in the buffer 58 with a selected address level.

A hardware reset vector 124, see Figure 2, is used to establish a particular reset.

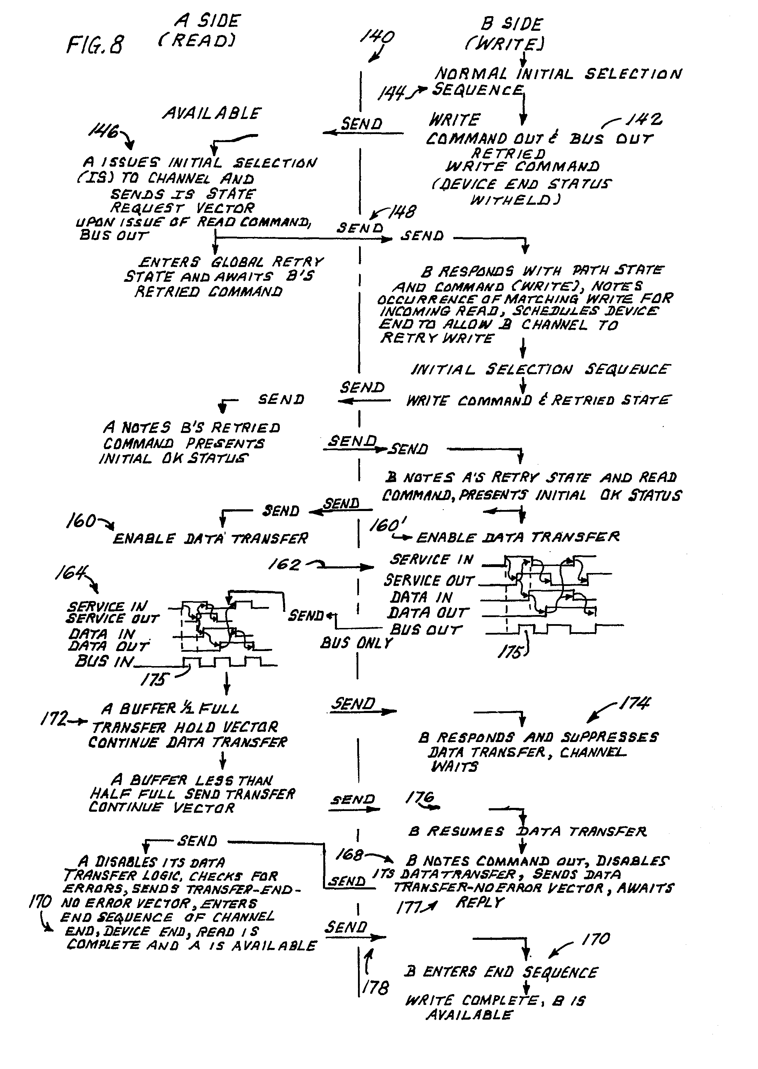

With reference to Figure 8 a sequence 140 is shown whereby channel 14 on the B side seeks to write data into channel 12 on the A side. In the view of Figure 8 events occurring on the respective A and B sides are presented side by side. Since the B side seeks to write data, the A side channel 12 must respond with a complementary read command.

In the system 10 certain signal sequences between a channel and a coupler 16 or 20 occur just like with a control unit in a manner as described in the aforementioned IBM publications. Thus as shown in Figure 8, the issue of a write command at 142 from channel 14 on the B side is preceded by an initial selection sequence 144 with signals on the bus and tag cables 13' as is well known. The initial selection sequence between the channel 14 and coupler 20 occurs with the control of microprocessor 26' which is programmed in a well known manner to complete the sequence with the channel 14 until the system is ready to transfer data which is done by the data transfer logic networks 44, 44'.

Thus at 146 the initial selection vector 100 is decoded at the A side coupler 16 and the write command from the B side results in a communication sequence begun at 148 by way of a request for a retry of the previously issued read command from channel 12 followed by an initial selection sequence between channel 12 and coupler 16. When a read command issues from channel 12 and is sent to the B side at 148, sequential responses arise between the A and B sides until both A and B coupler units have their data transfer logic networks enabled at 160, 160'.

Data transfer then occurs at channel speeds. In case of one typical high speed data transfer the signals service-in and service-out, data-in and data-out occur with bus-out at 162 followed by service-in from coupler unit 20. The data bytes on the bus-out lines are then formatted by coupler 20 for transmittal along data link 18. When the data bytes arrive at coupler 16 the bytes, after having been reformatted at channel speed, are immediately transferred to channel 12 along its bus-in lines by following the sequence as shown at 164. The arriving data bytes such as 175 trigger the start of the appropriate data transfer protocol signals. Thus in response to the arrival of a data byte, coupler 16 and channel 12 raise service-in service-out, data-in and data-out and transfer data to channel 12. This continues until one of the channels, such as the originating B side channel 14, issues a stop command as at 168 which is transmitted to the A side. Each coupler unit 16 and 20 then enter an end sequence 170.

Note that in case the A side buffer 58 is more than half full, a transfer hold vector 118 is sent at 172 to the B side. In response coupler unit 20 issues a suppress signal at 174 until at 176 a transfer continue vector 120 is received at the B side to indicate that buffer 58 is again less than half full.

The end sequence 170 when initiated includes a disabling of the data transfer hardware and the sending of an appropriate control word vector 114 or 116 first from the B side to the A side with the B side awaiting a reply at 177. The A side coupler unit 16 responds to the transfer-end vector by disabling its data transfer logic, checking for errors during the transmission and if none occurred at 178, returning to the B side, a vector 114 signifying a data transfer without errors. The A side then enters its ending sequence with channel 12 which has completed its read command.

Note that if an error had occurred, its occurrence is reported to the controller. No recovery from an error, however, is provided. When a channel issues a read command, a similar sequence as that described for Figure 8 is entered except that the read command from one channel must be complemented by a write command from the other channel.

Having thus described a channel-to-channel extender in accordance with the invention its advantages can be appreciated. Variations can be made without departing from the scope of the invention.
The description of program steps, such as in Figures 6, 7 and 8 and elsewhere herein constitute the creation of a particular system personality which is unique and a part of the apparatus invention herein as well as a description of a method for practicing the invention. Programming of the functions herein described in the microprocessor may incorporate techniques as described in the aforementioned publications.

0239324

CLAIMS

1. A system for enabling a first IBM CPU channel located at one site to communicate at a channel speed with a second remotely-located channel of another IBM CPU located at a remote site through a duplex high speed serial data communication link that extends between the sites, comprising:

first and second couplers for coupling to said data link and respectively through bus and tag cables to the first and second channels,

said couplers each comprising:

PISO means for converting data in parallel form to a serial form suitable for transmission through the data link at a channel speed;

SIPO means for receiving serial data passed through the link from PISO means and for converting said received data to parallel form;

means for generating vectors for transmittal from a source coupler over the data link to the other coupler, wherein the vectors represent sequences desired between the other coupler and its connected channel and represent the status of the source coupler and its data communication with a CPU channel;

means for detecting said vectors to initiate said sequences; and

data transfer and assist logic means coupled to the PISO means and SIPO means for data communication through bus and tag cables to a CPU channel to transfer data channel speed with a channel using interlocking signals and provide data to said PISO means without interlocking signals.

2. A system as claimed in claim 1 wherein each coupler includes:

means for generating initial selection and end sequence signals for use with a CPU channel in a manner that is compatible with CPU channel to channel adapter protocol; and

means responsive to a vector received from a remote coupler over the data link for initiating a said sequence.

3. A system as claimed in claim 2 and further including in each coupler:

means responsive to a said vector for enabling said data transfer and assist logic means.

4. A system as claimed in claim 3 wherein each coupler further includes a buffer interposed between the SIPO means and the data transfer and assist logic means;

means for detecting when the buffer is filled with a predetermined amount of data and producing a transfer hold vector indicative thereof;

means responsive to a detected transfer hold vector to cause a suppression of data transfer from a connected channel;

means for producing a transfer continue vector when the buffer contains less data than said predetermined amount after containing a greater amount of data; and

means responsive to a detected transfer continue vector to enable a resumption of the transfer of data from a connected channel.

5. A system as claimed in claim 4 wherein each coupler further includes:

controller means for operating and monitoring the data link, said controller means producing control words for transmittal along the data link.

6. A method for enabling a first IBM CPU channel located at one site to communicate at a channel speed with a second remotely located channel of another IBM CPU located at a remote site through a duplex high speed serial data communication link that extends between the sites, comprising the steps of:

commencing an initial selection sequence with a first channel at one site;

producing at said one site, a vector representative of a selection sequence desired with the second channel at the remote site;

generating interlocked signal sequences with the first channel to transfer data therefrom to the data link;

sending the data over the data link without interlocking signals to the remote site; and

transferring data at the remote site to the second channel using interlocking signals.

7. A method as claimed in claim 6 wherein the vector producing step includes the steps of:

producing a vector representative of a write request from the first channel;

sending the write request vector through the serial data link to the second channel;

in response to the write request vector, producing a vector representative of a read request from the second channel;

sending the read request vector through the serial data to the first channel; and

enabling data transfer from the first channel and to the second channel.

8.    A method as claimed in claim 7 wherein said enabling step includes:

following the production of the read request vector by initiative global retry requests from the second channel; and

upon receipt of the read request vector, producing a second write request vector from the first channel; and

sending the second write request vector through the data link to the second channel.

9.    A method as claimed in claim 8 wherein said enabling step further includes the steps of:

sending vectors representative of the second channel's retry state and read request through the data link to the first channel; and

sending a vector representative of the status of the first channel to the second channel to enable data transfer to the latter channel.

10.    A method as claimed in claim 6 and further comprising:

producing a transfer hold vector representative of the filling of a buffer located at the remote site in excess of a predetermined amount;

sending said transfer hold vector through the data link to the one site to suppress transfer of data from the first channel;

producing a transfer continue vector representative of the buffer being emptied below the predetermined amount after having been filled above this amount; and

sending the transfer continue vector through the data link to the one site to cause a resumption of data transfer from the first channel.

FIG.1

FIG. 2          CONTROL

LINK WORD

| EIGHT DATA BITS | P | TWO CONTROL | 12th BIT PARITY |

SEQUENCE VECTOR
CONTINUE

DATA

SEQUENCE VECTORS:

100 — INITIAL SELECTION SEQUENCE - STATE REQUEST

102 — CONTROL UNIT STATUS REPORT

104 — SYSTEM RESET

108 — SELECTIVE RESET

110 — INTERFACE DISCONNECT

106 — SYSTEM CLEAR (FROM RESET)

112 — SEQUENCE END

114 — TRANSFER COMPLETE - NO ERROR

116 — TRANSFER COMPLETE - ERROR

118 — TRANSFER HOLD

120 — TRANSFER CONTINUE

124 — HARDWARE RESET

FIG. 3
CONTROL UNIT STATUS REPORT

102   103 ~ MASTER / SLAVE
          RETRY IN PROGRESS
          POLL / RESPONSE
          ON LINE REQUEST
          OFF LINE REQUEST
          ON LINE / OFF LINE

FIG. 4

72 → DECODE ← FIFO 58

54

56

TO DATA TRANSFER LOGIC ← SW

TO µP

74

122 BUFFER MORE THAN HALF FULL

PARITY CHECK 90

FIG. 5

CHANNEL DATA 80 → MUX 82

µP DATA 84 →

CONTROL 86

ENCODER 88 →

CLK

FIG. 6

A SIDE                B SIDE

← SEND SYSTEM RESET VECTOR—104

INDICATE BUSY

RESET COUPLER 16
—105

GENERATE SYSTEM CLEAR~106 SEND →

TERMINATE BUSY

PROCEED

0239324

A SIDE

↓

READ

↓

BUFFER MORE THAN
123⁓HALF FULL ⟶ SEND VECTOR 118

CONTINUE READ

↓

BUFFER LESS THAN
HALF FULL ⟶ SEND VECTOR 120

↓

B SIDE

↓

WRITE

1187

SUPPRESS DATA
TRANSFER

1207

RESUME WRITE

↓

FIG.7

0239324

FIG.8

A SIDE (READ)

B SIDE (WRITE)

140

NORMAL INITIAL SELECTION SEQUENCE

144

AVAILABLE

SEND

WRITE COMMAND OUT & BUS OUT RETRIED WRITE COMMAND (DEVICE END STATUS WITHELD)

142

146

A ISSUES INITIAL SELECTION (IS) TO CHANNEL AND SENDS IS STATE REQUEST VECTOR UPON ISSUE OF READ COMMAND, BUS OUT

148

SEND

SEND

ENTERS GLOBAL RETRY STATE AND AWAITS B'S RETRIED COMMAND

B RESPONDS WITH PATH STATE AND COMMAND (WRITE), NOTES OCCURRENCE OF MATCHING WRITE FOR INCOMING READ, SCHEDULES DEVICE END TO ALLOW B CHANNEL TO RETRY WRITE

INITIAL SELECTION SEQUENCE

SEND

SEND

WRITE COMMAND & RETRIED STATE

A NOTES B'S RETRIED COMMAND PRESENTS INITIAL OK STATUS

SEND SEND

B NOTES A'S RETRY STATE AND READ COMMAND, PRESENTS INITIAL OK STATUS

SEND SEND

160

ENABLE DATA TRANSFER

160'

ENABLE DATA TRANSFER

SERVICE IN

162

SERVICE OUT
DATA IN
DATA OUT
BUS OUT

164

SERVICE IN
SERVICE OUT
DATA IN
DATA OUT
BUS IN

SEND

175

175

BUS ONLY

172

A BUFFER ½ FULL TRANSFER HOLD VECTOR CONTINUE DATA TRANSFER

SEND

174

B RESPONDS AND SUPPRESSES DATA TRANSFER, CHANNEL WAITS

A BUFFER LESS THAN HALF FULL SEND TRANSFER CONTINUE VECTOR

SEND

176

B RESUMES DATA TRANSFER

SEND

A DISABLES ITS DATA TRANSFER LOGIC, CHECKS FOR ERRORS, SENDS TRANSFER-END-NO ERROR VECTOR, ENTERS END SEQUENCE OF CHANNEL END, DEVICE END, READ IS COMPLETE AND A IS AVAILABLE

168

170

SEND

B NOTES COMMAND OUT, DISABLES ITS DATA TRANSFER, SENDS DATA TRANSFER-NO ERROR VECTOR, AWAITS REPLY

177

SEND

170

178

B ENTERS END SEQUENCE

WRITE COMPLETE, B IS AVAILABLE